(19) **Europäisches Patentamt / European Patent Office / Office européen des brevets**

(11) **EP 3 101 342 B1**

(12) # EUROPEAN PATENT SPECIFICATION

(45) Date of publication and mention of the grant of the patent:
**29.04.2020 Bulletin 2020/18**

(51) Int Cl.:
*F23K 5/12* *(2006.01)*  *F02C 3/30* *(2006.01)*
*F23N 5/00* *(2006.01)*

(21) Application number: **15170225.5**

(22) Date of filing: **02.06.2015**

(54) **METHOD AND SYSTEM FOR OPERATING A COMBUSTION DEVICE**

VERFAHREN UND SYSTEM ZUM BETRIEB EINER VERBRENNUNGSVORRICHTUNG

PROCÉDÉ ET SYSTÈME POUR FAIRE FONCTIONNER UN DISPOSITIF DE COMBUSTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.12.2016 Bulletin 2016/49**

(73) Proprietor: **Ansaldo Energia IP UK Limited London W1G 9DQ (GB)**

(72) Inventors:
• **Bernero, Stefano**
  **5452 Oberrohrdorf (CH)**
• **Zhang, Xiao-Yi**
  **5443 Niederrohrdorf (CH)**

• **Knapp, Klaus**
  **5412 Gebenstorf (CH)**
• **Haffner, Ken Yves**
  **5400 Baden (CH)**

(74) Representative: **Bernotti, Andrea et al**
  **Studio Torta S.p.A.**
  **Via Viotti, 9**
  **10121 Torino (IT)**

(56) References cited:
**EP-A1- 2 613 034    WO-A1-2004/010052**
**CN-A- 103 884 740    CN-U- 201 963 380**
**GB-A- 2 132 112    US-A1- 2007 133 921**

**Description**

TECHNICAL FIELD

The present invention generally relates to the field of combustion technology related to gas turbines. More in particular, the present invention refers to a method and system for operating a combustion device.

BACKGROUND

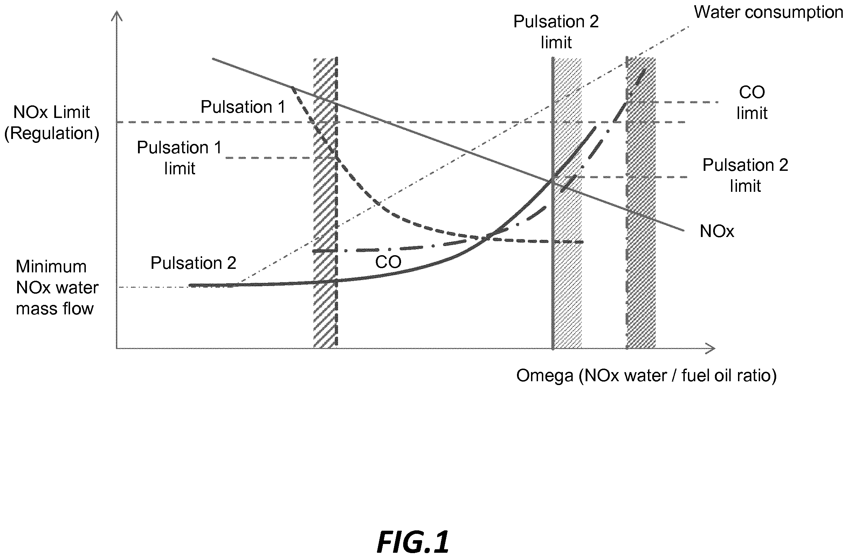

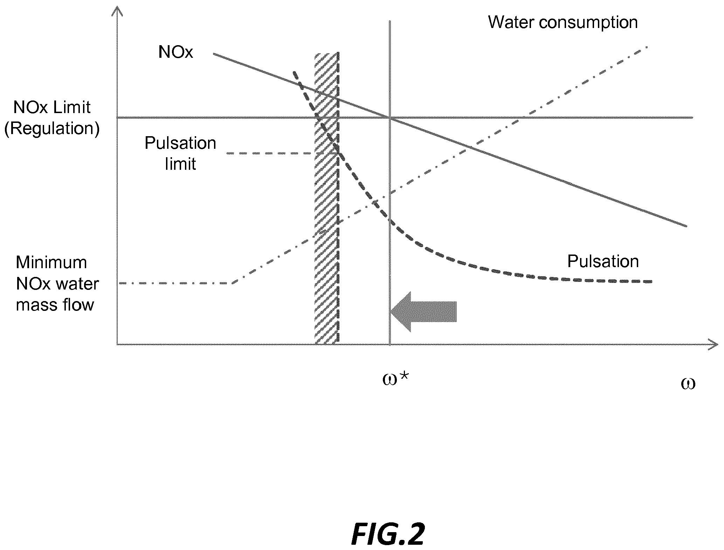

As well known, emission regulations require low pollutant emission levels, which in the current state-of-the-art can be usually reached in gaseous fuel operation without any water addition thanks to premix combustion technologies. In liquid fuel operation, however, for most of the gas turbines addition of NOx water is mandatory to prevent pulsations, high NOx emissions and burner/combustor overheating. The ratio between the quantity of water introduced and the fuel is generally referred to as parameter $\omega$ (NOx water to fuel oil mass flow ratio). An example of how different combustor characteristics may react to varying proportion of NOx water or $\omega$ for a given operation point is shown in Figure 1, where also possible operational limitations due to emission regulation or lifetime impact due to combustor pulsation levels are indicated. Figure 2 shows the diagram of figure 1 where an optimum value $\omega^*$ is indicated which should be kept during the combustion process to avoid high pulsations, to remain below NOx limit regulations and, at the same time, contain within acceptable ranges the water consumption.

Gas turbine combustor operation needs to be optimized for pulsation and emissions over a wide operating range. Typically, NOx water mass flow is scheduled as a function of gas turbine process variables, such as, for example, VIGV position and turbine exhaust temperature. These functions are pre-defined during engine adjustment based on combustor mapping results at a few points and boundary conditions under steady state. Typically, the combustor behaviour is heavily affected by ambient conditions, fuel property and hardware conditions, etc. The pre-defined NOx water to fuel oil mass flow ratio ($\omega$) is optimal for a specific engine and under operation and boundary conditions at the time of adjustment, but the optimum might differ during continuous commercial operation.

Disadvantages of current solutions are that high margins to pulsation and NOx limits need to be included in the parameters settings in order to cover the expected variations in operation, which results in higher NOx water consumption and therefore important operational costs. Also, if larger deviations than expected occur in the boundary conditions or combustion characteristics, undesired events might be experienced leading to emission non-compliance or protection actions due to pulsation and therefore causing reduced engine reliability. Additionally, on site adjustment of the $\omega$ schedule is time consuming and leads to an increased commissioning and outage duration.

Automatic $\omega$ adjustment is proposed in US6679060B2, EP1215382B1 based on measurement of at least one among pulsation, material temperature, and flame position. These can be used to optimize pulsation and overheating risks but may still lead to high NOx levels and NOx water consumption. Another solution is disclosed in document WO 2004/010052. However the fuel control system disclosed in said last document is not sufficiently reliable and efficient.

SUMMARY OF THE INVENTION

It is an object of the present invention to solve the aforementioned technical problem by providing a system for operating a combustion device as substantially defined according to independent claim 1.

It is a further object of the present invention to provide method for operating a combustion device as substantially defined in independent claim 9.

According to an aspect of the invention, this object is obtained by a system for controlling a combustion process of a gas turbine, the gas turbine comprising a combustor and a fuel feeding system configured to control parameter $\omega$ defined as a ratio between NOx water and fuel oil mass flows, wherein the system comprises an apparatus for measuring NOx emission levels in the exhaust of the combustor; a measurement arrangement for measuring combustion process variables; a controller configured to receive input signals corresponding to measured NOx and process variables respectively from the apparatus and the measurement arrangement, to elaborate a value for the parameter $\omega$ based on the input signals and to generate and send an output signal correspondent to the calculated value directed to the fuel feeding system.

According to a preferred aspect of the invention, the apparatus for measuring NOx emission levels is capable to carry out such operation within a time frame which is shorter than 20 sec.

More preferably, the apparatus for measuring NOx emission levels is capable to carry out such operation within a time frame which is shorter than 10 sec.

More preferably, the apparatus for measuring NOx emission levels is capable to carry out such operation within a time frame which is shorter than 2 sec.

Even more preferably, the apparatus for measuring NOx emission levels is capable to carry out such operation within a time frame which is shorter than 1 sec.

According to a preferred aspect of the invention, the measuring arrangement may comprise a device configured to measure pulsation levels within the combustor.

According to a preferred aspect of the invention, the apparatus for measuring NOx emission levels may comprise an optical sensor device providing an array of nano and/or microcrystalline fibers.

According to a preferred aspect of the invention, the system may comprise a fluid sample extraction assembly located in a combustor plenum, wherein the apparatus for measuring NOx emission levels is located at ambient conditions and is fluidically connected to the fluid sample extraction assembly.

According to a preferred aspect of the invention, the apparatus for measuring NOx emission levels comprises a sensor located inside a combustor plenum and an evaluation unit connected thereto in turn located at ambient conditions.

According to a preferred aspect of the invention, the controller may comprise first means for calculating a $\Delta\omega$ based on measured levels of NOx emissions and pulsation levels.

According to a preferred aspect of the invention, the controller may comprise second means for calculating a parameter $\omega'$ as a predefined function of measured process variables.

According to a preferred aspect of the invention, the controller may comprise a subtracting device configured to receive input signals corresponding to the value of $\omega'$ calculated by the second means and to the value of $\Delta\omega$ calculated by the first means, and to generate and send to the fuel feeding system an output signal corresponding to a value: $\omega = \omega' - \Delta\omega$.

According to a further object of the invention, it is provided a method for controlling a combustion process of a gas turbine, the gas turbine comprising at least a combustor and a fuel feeding system configured to control parameter $\omega$ defined as a ratio between NOx water mass and fuel oil flows, said method including the steps of: measuring NOx emission levels in the exhaust of the combustor; measuring combustion process variables; elaborating a value for parameter $\omega$ based on the NOx emissions and measured process variables and generating an output signal correspondent to the value $\omega$ directed to the fuel feeding system.

According to a preferred aspect of the invention, measuring NOx emission levels is carried out within a time frame which is shorter than 20 sec.

More preferably, the NOx measures are carried out within a time frame which is shorter than 10 sec.

More preferably, the NOx measures are carried out within a time frame which is shorter than 2 sec.

Even more preferably, the NOx measures are carried out within a time frame which is shorter than 1 sec.

According to a preferred aspect of the invention, the measuring combustion process variables may include measuring pulsation levels within the combustor.

According to a preferred aspect of the invention, the step of elaborating a value for said parameter $\omega$ may comprise calculating a parameter $\omega'$ as a predefined function of measured process variables.

According to a preferred aspect of the invention, the step of elaborating a value for said parameter $\omega$ may comprise a step of calculating a $\Delta\omega$ based on measured levels of NOx emissions and pulsations.

According to a preferred aspect of the invention, the step of elaborating a value for said parameter $\omega$ may comprise a step of subtracting the $\Delta\omega$ from $\omega'$ and generating and sending to the fuel feeding system an output signal corresponding to a value $\omega = \omega' - \Delta\omega$.

BRIEF DESCRIPTION OF THE DRAWINGS

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:

Figure 1 and 2 show an operational diagram indicating various correlations between the $\omega$ of the process and other process variables;

Figure 3 shows a simplified diagram of a system for controlling a combustion process according to the present invention;

Figure 4 show a first example of a disposition of an apparatus for measuring NOx emission levels;

Figures 5 and 6 show a second example of disposition of an apparatus for measuring NOx emission levels;

Figure 7 shows a third example of disposition of an apparatus for measuring NOx emission levels;

Figure 8 and 9 show a fourth example of disposition of an apparatus for measuring NOx emission levels;

Figure 10 illustrates a block diagram of a first embodiment of a control logic according to a method of the present invention;

Figure 11 shows in more detail a portion of the diagram of figure 10;

Figure 12 illustrates a block diagram of a second embodiment of a control logic according to a method of the present invention;

Figures 13 and 14 show diagrams illustrating the variance of parameter ω according to predefined correlations

Figure 15 and 16 show respectively different groupings for different kind of combustors and examples of staging options.

Exemplary preferred embodiments of the invention will be now described with reference to the aforementioned drawings.

DETAILED DESCRIPTION OF THE INVENTION

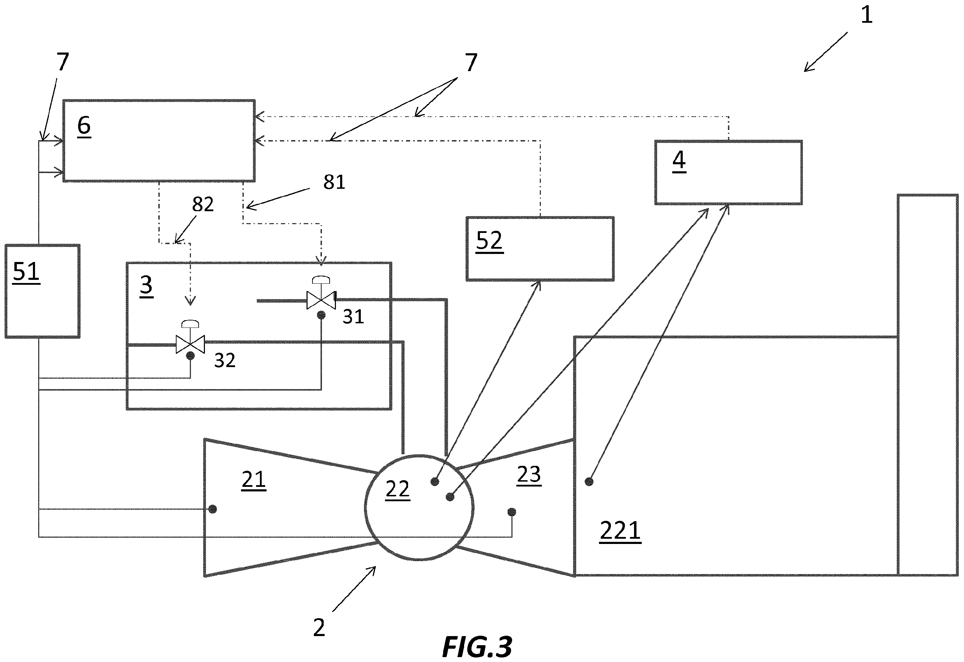

With reference to figure 3, it is shown a simplified diagram of a system 1 for controlling a combustion process according to the present invention. More in particular, system 1 is associated to a gas turbine 2, which in turn comprises a compressor section 21, a combustor 22 and a turbine section 23. System 1 is also associated to a fuel feeding system, generally referred to with numeral reference 3 in the scheme of figure 3. The fuel feeding system 3 comprises a first means 31 to feed fuel into the combustor 22 and a second means 32 to control parameter ω, therefore enabling the addition of water to the fuel.

The system 1 comprises an apparatus 4 adapted to measure NOx emission levels produced in the combustor 22 and/or in an exhaust 221 of the combustor 22, and a measurement arrangement 51, 52 for measuring other process variables. More in particular, arrangement 51 is adapted to measure process variables such as, for example, TAT (Temperature after Turbine), VIGV (Variable inlet guide vane angle), LHV (Low heating Value) and β (Fuel Gas mass flow to total fuel mass flow ratio), the latter being define by the following equation:

$$\text{Beta}_{\text{TOTAL}}\ [\%] = \frac{\dot{m}_{GAS} \bullet LHV_{GAS}}{\dot{m}_{GAS} \bullet LHV_{GAS} + \dot{m}_{OIL} \bullet LHV_{OIL}} * 100$$

Arrangement 51 is configured to measure the current value of parameter ω, by calculating the flows of fuel and water.

Arrangement 52 is configured to measure pulsation levels within the combustor.

The system 1 according to the invention comprises a controller 6, such as a data processor, configured to receive input signals 7 corresponding to the measured NOx levels and to other process variables, respectively from apparatus 4 and from measuring arrangements 51, 52 to elaborate a value for the parameter ω based on those input signals and to send correspondent output signals 81 (fuel oil mass flow command) and 82 (NOx water mass flow command) to the fuel feeding system 3, which in turn regulates parameter ω of the process, in other words the ratio of water of the fuel-water emulsion introduced in the combustor.

A fuel feeding system is a configuration well-known in the art and therefore a detailed description of the same will be herewith omitted.

Advantageously, apparatus 4 for measuring the NOx levels is capable of measuring NOx emissions within a timeframe shorter than twenty seconds.

According to preferred embodiments, such NOx level measurements may be carried out within a time frame shorter than ten seconds. According to preferred embodiments, such NOx level measurements may be carried out within a time frame shorter than two seconds.

According to preferred embodiments, such NOx level measurements may be carried out within a time frame shorter than one second.

In this way, required measurements may be effected fast enough to ensure an optimum control of ω based not only on process variables but, most importantly, on NOx levels.

In particular, a typical time interval (cycle time) for a gas turbine closed loop control is fifty msec. Hence, parameter ω is elaborated every fifty msec.

Apparatus 4 for measuring NOx levels may utilize technologies based on molecular-level measurements using stimulated Raman scattering.

As a preferred and non-limiting example, apparatus 4 may include an optical sensor device for local analysis of a combustion process of a thermal power plant, which includes at least one wavelength selective optical element exposed directly or indirectly to hot combustion gases. More in particular, the optical element an array of nano and/or microcrystalline fibres which are created by shear flow crystallization.

Such device is known in the art and described in US 2007/0133921. By means of such optical device, local gas diagnostics, particularly for NOx pollutant emission levels, can be achieved within time frame shorter than 20 seconds.

According to preferred embodiments, optical device described in US 2007/0133921 may be adapted to achieve such NOx emission levels within a time frame shorter than ten seconds.

According to preferred embodiments, optical device described in US 2007/0133921 may be adapted to achieve such NOx emission levels within a time frame shorter than two seconds.

According to preferred embodiments, optical device described in US 2007/0133921 may be adapted to achieve such NOx emission levels within a time frame shorter than one second.

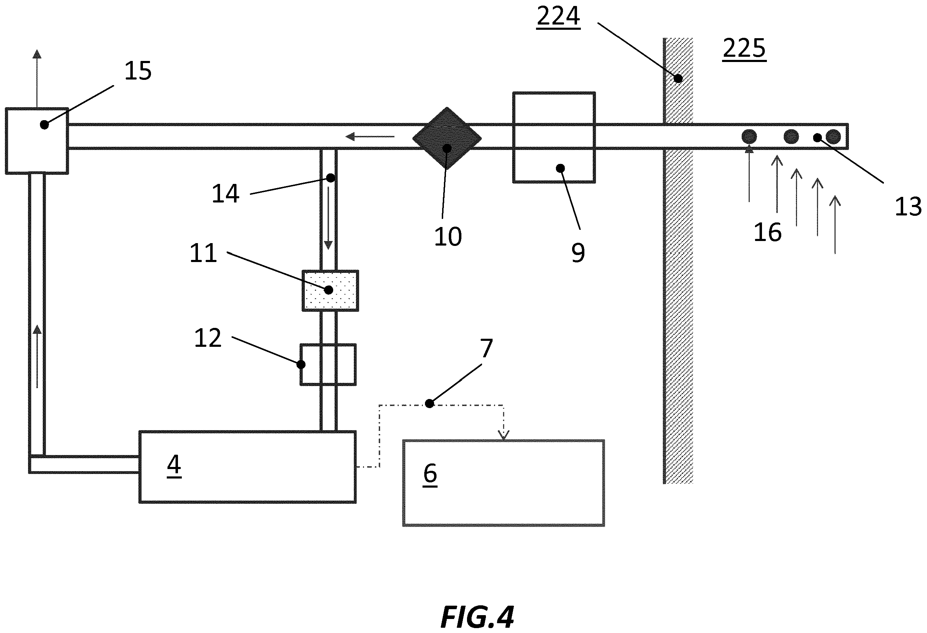

With reference to next figure 4, it is shown a possible configuration of the system for controlling a combustion process according to the invention. In particular, apparatus 4 for measuring NOx emissions is located at ambient conditions (ca 20 C and 101.3 kPa) and exhaust gases 16 in a combustor plenum 225 (ca 700 K and 2 Mpa), surrounded by a gas turbine casing 224, are extracted by means of a fluid sample extraction assembly 13 located inside the combustor plenum 225 and fluidically connected to the apparatus 4. The exhaust gases 16 are led through a cooler 9 and a pressure reduction valve 10. Then the gas to be analysed is directed to the apparatus 4 through a bypass duct 14 which comprises one or more filters 11 and, preferably, a drier 12. The apparatus 4 performs the measurements, calculates the value of NOx levels and sends the correspondent output signal 7 to the controller 6. The exhaust gas going through the apparatus 4 is then expelled by means of a vent 15. Advantageously, the bypass flow of exhaust gases through the bypass duct 14 allows a reduction of the measurement time.

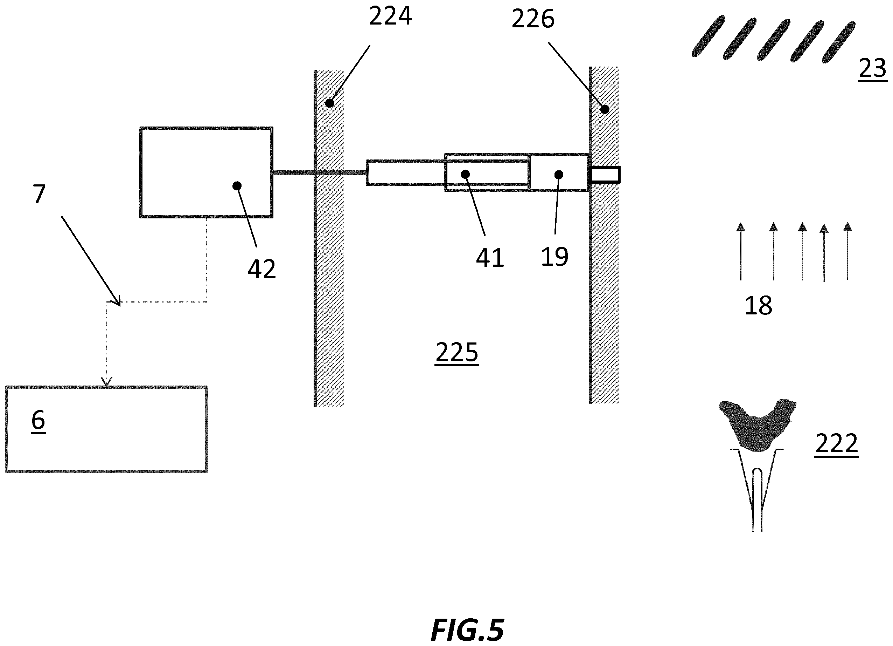

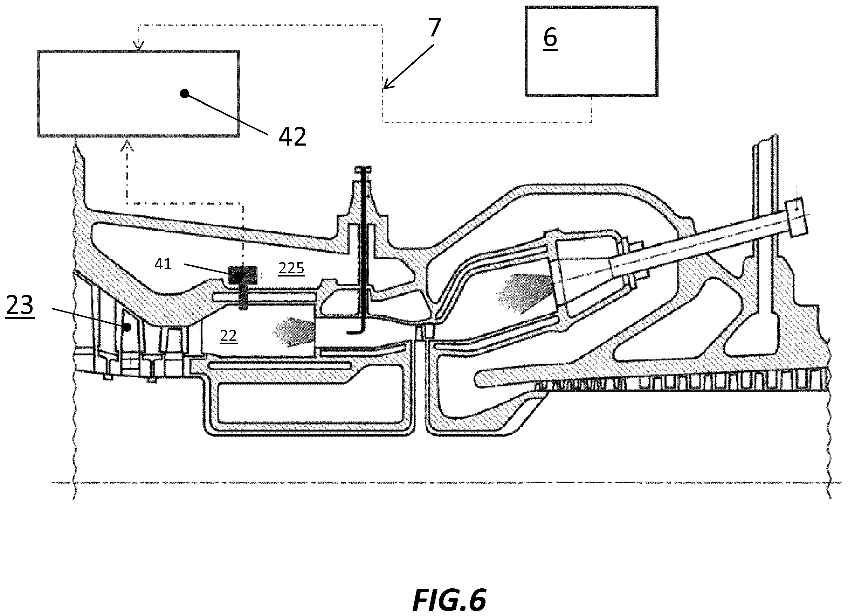

Making now reference to following figures 5 and 6, it is depicted another example of a possible configuration for the system for controlling a combustion process according to the invention. In this case, the apparatus for measuring NOx levels comprises a sensor 41 located inside the combustor plenum 225 delimited by the gas turbine casing 224 and a combustion liner 226. The sensor 41 senses hot gases 18 coming from the combustor chamber 222, where the temperature is around 1700 K and the pressure equal to 2 Mpa, through an upstream filter 19. The apparatus for measuring NOx levels further comprises an electronic evaluation unit 42 which sends the output signal 7, corresponding to the NOx current value, to the controller 6.

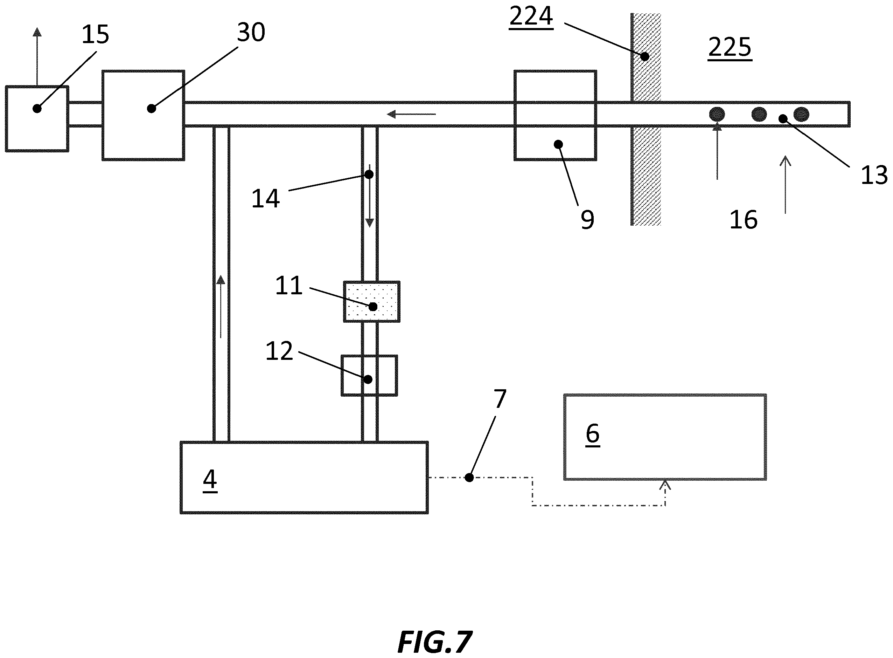

With reference to figure 7, it is shown yet another example of apparatus 4 located at ambient conditions. The configuration shown is similar to the one depicted in figure 5 with the sole difference that the pressure reduction valve is absent and it is replaced by an extraction pump 30, positioned downstream the apparatus 4, configured to withdraw hot gas samples 16 located in the combustor plenum 225 through the sample extraction assembly 13.

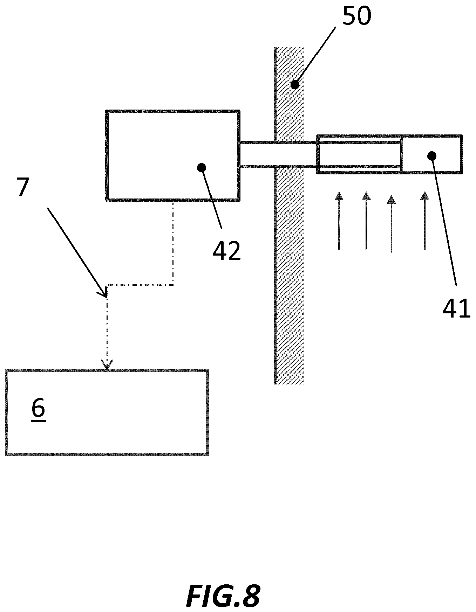

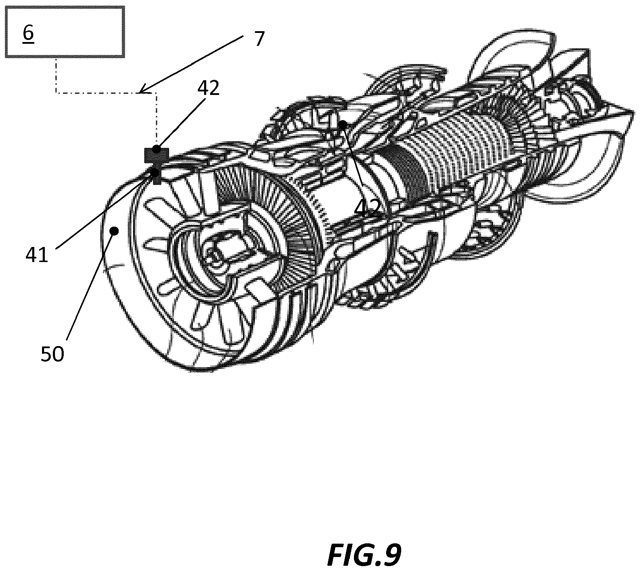

Alternatively, as shown in figures 8 and 9, the sensor 41 may be located within a gas turbine gas casing 50, where the temperature is around 600 C and the pressure equal to 101.3 kPa, and then connected to the electronic evaluation unit 42 which is located at ambient conditions as described for the example illustrated in figure 6.

The system for controlling the combustion process as described operating according to a method as described below.

The method according to the invention includes the step of measuring NOx emission levels in the exhaust of the combustor; measuring combustion process variables; elaborating a value for parameter $\omega$ based on the measured NOx emission levels and process variables; generating an output signal corresponding to the calculated $\omega$ and sending it to the fuel feeding system.

According to preferred embodiments the NOx measurement is accomplished within a time frame shorter than twenty seconds.

According to preferred embodiments, the NOx measurement is accomplished within a time frame shorter than ten seconds. According to preferred embodiments, the NOx measurement is accomplished within a time frame shorter than two seconds. According to even more preferred embodiments, the NOx measurement is accomplished within a time frame shorter than one second.

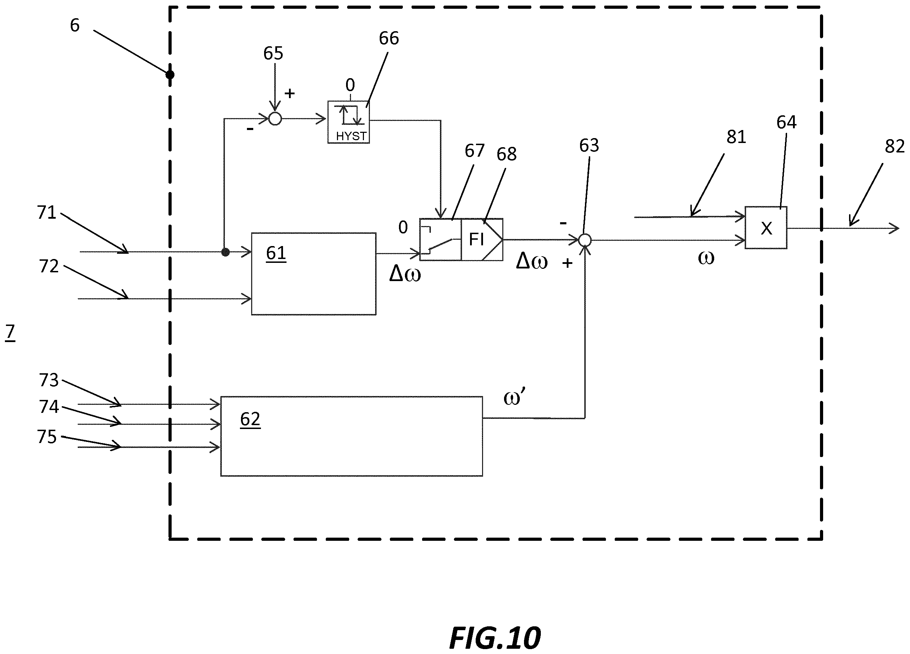

Making now reference to figure 10, it is shown a block diagram illustrating the method according to the invention. In particular, measured quantities, overall indicated with numeral 7, include signals corresponding to the measured NOx levels 72, the pulsation levels 71 and other process variables, like TAT 73, VIGV 74 and $\beta$ 75 to quote some non-limiting examples.

Signals 7 reach the controller unit 6 where they are elaborated in order to generate a value for parameter $\omega$ to be sent to the fuel feeding system. In particular, controller 6 comprises first means 61, which receives input signals 72 and 71 respectively corresponding to measured levels of NOx and pulsations, for calculating a $\Delta\omega$ which represents a possible reduction of the value of $\omega$, as it will be better explained in the following.

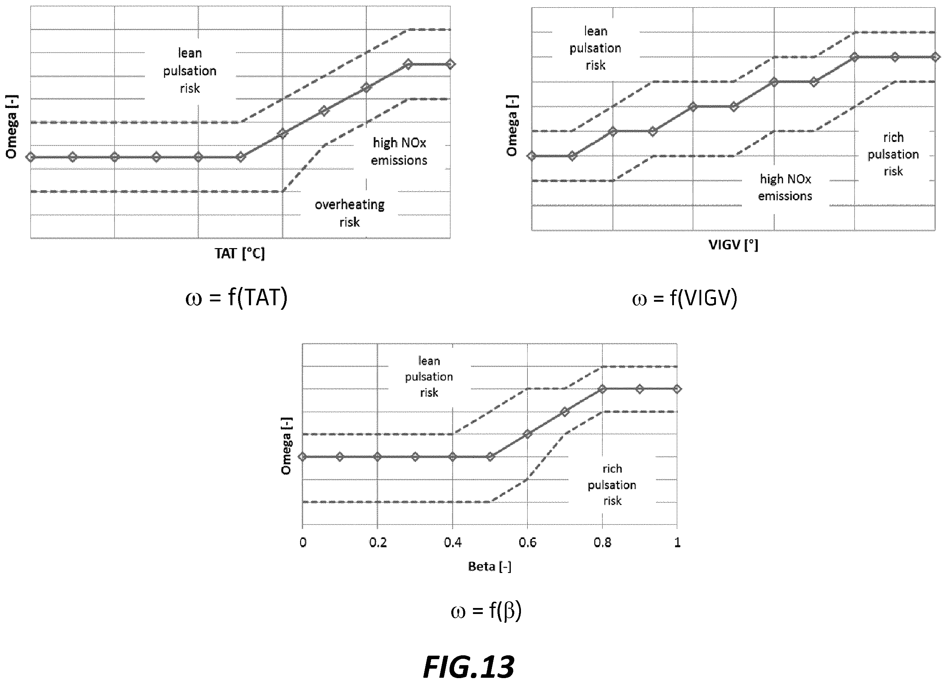

Controller 6 further comprises second means 62, which receives as input signals process variables measurements 73, 74 and 75. Second means 62 elaborate of value $\omega'$ based on predefined functions of said measured process variables. In figure 13 graphs showing these typical functions are illustrated. They are defined based on combustor mapping results in order to keep enough margins from high pulsation and high NOx emission areas. Second means 62 utilize these functions, in a way known to those who are skilled in the art, to calculate $\omega'$.

However, the combustor behaviour is heavily affected by ambient conditions, fuel property and hardware conditions. The pre-defined $\omega$ functions are optimal for an average engine and under average operative conditions, but usually result in too high NOx water consumption, with significant cost increase.

First means 61 and second means 62 send, respectively, the reduction value $\Delta\omega$ and the value $\omega'$ to a subtracting

device 63 which generates and sends to the fuel feeding system an output signal corresponding to a value

$$\omega = \omega' - \triangle\omega$$

Generated $\omega$ value and signal 81 corresponding to the fuel oil mass flow command are sent to a multiplier 64 which generates the NOx water mass flow command 82 which is sent to the fuel feeding system.

According to preferred embodiments, signal 71 corresponding to measured pulsation levels is sent, upstream the first means 61, to a subtracting device 65. The subtracting device 65 subtracts the measured pulsation value from a predefined pulsation limit value and the result is fed to a threshold block 66 with hysteresis. The threshold block 66 is in turn connected to a switch 67. It switches between two inputs: 0 or $\triangle\omega$ coming from first means 61, as detailed above. If the measured pulsation is below the pulsation limit, then $\triangle\omega$ will be selected and passed to a gradient limiter 68 and subsequently to subtracting device 63. Otherwise, if pulsation limit has been reached or passed, 0 will be selected and no reduction $\triangle\omega$ will be enabled.

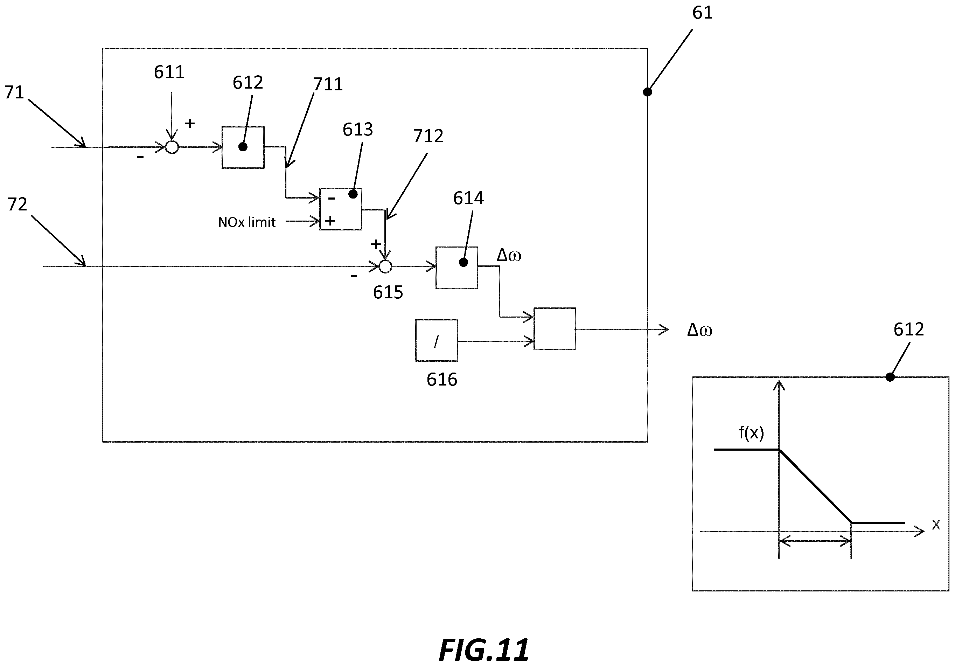

First means 61 is better detailed with reference to next figure 11, which will be now discussed. In particular, measured pulsation 71 is fed to a subtracting device 611 which calculates the difference between the predefined pulsation limit and the measured pulsation 71. Device 611 then feeds the result to a function block 612, which is shown in a better detail in the bottom-right corner of the figure. Function block 612 has the purpose of calculating a necessary reduction from a predefined NOx emission level limit in order to keep the combustion away from high pulsation area. In the graph of block 612, x represents the input fed by the subtracting device 611, that is the difference between the pulsation limit and the measured pulsation 71. The output f (x), identified in the scheme with numeral 711, indicates the necessary reduction of NOx from the NOx limit calculated as a function of x. Subsequently, block 613 calculates a NOx target value 712 by subtracting the calculated reduction of NOx 711 from the NOx limit value. First means 61 further comprises a PI controller 614 which receives as input the difference between NOx target value 712 and NOx measured value 72 (calculated by a subtracting device 615) and generates as output a possible reduction $\triangle\omega$ based on the current NOx measured value 72.

In order to prevent over firing and keep NOx water system running, a minimum NOx water mass flow is needed. Block 616 is a divider which calculates a minimum $\omega$ to be ensured.

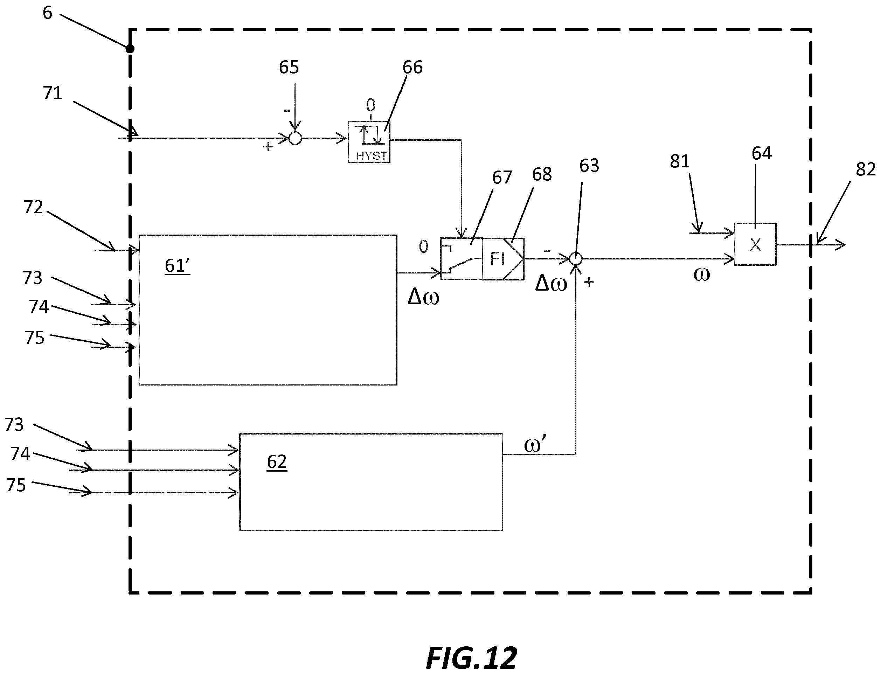

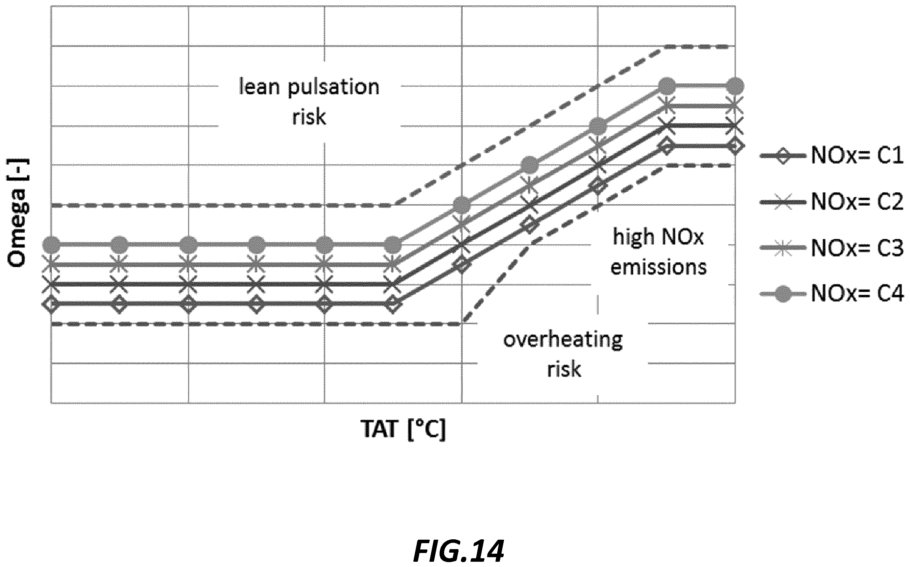

An alternative embodiment for the controller 6 is represented in next figure 12. It differs from the embodiment shown in figure 11 in the fact that a function generator block 61' is used which generates a possible reduction $\triangle\omega$. Particularly, the block 61' can reduce $\omega$ based on the measured NOx level emission. Figure 14 shows a typical example, including various $\omega$ curves for corresponding NOx emission measured levels.

It will be appreciated that for combustion processes having several fuel stages, the system according to the invention advantageously controls parameter $\omega$ to each fuel stage, in order to minimize NOx emissions, pulsations and overall water consumption.

Moreover, for combustion processes with multiple burners or combustors/cans, a plurality of measurement systems as the one described may be utilized also to detect faulty can or combustor sectors.

For combustion processes with multiple burners or combustors/cans and multiple fuel and multiple fuel and/or NOx water control, a plurality of measurement systems as the one described may be used to adjust multiple mass flows in order to minimize emissions, pulsation, and overall water consumption.

It will be also appreciated that the system and the method according to the present invention may be applied to silo combustors, annular combustors, can combustors, sequential combustors, staged combustors, and to any combinations thereof, with separate fuel groups or stages.

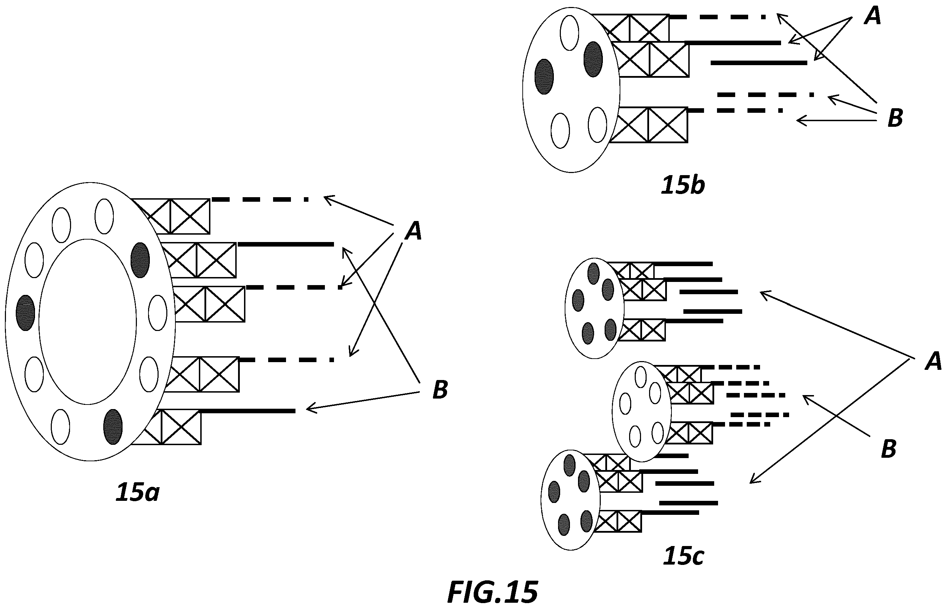

Figure 15 shows different groupings for different kind of combustors. In particular, figure 15a shows a burner grouping A/B for an annular combustor; figure 15b shows a fuel staging grouping A/B for a can combustor; figure 15c shows a can grouping A/B for a can combustor.

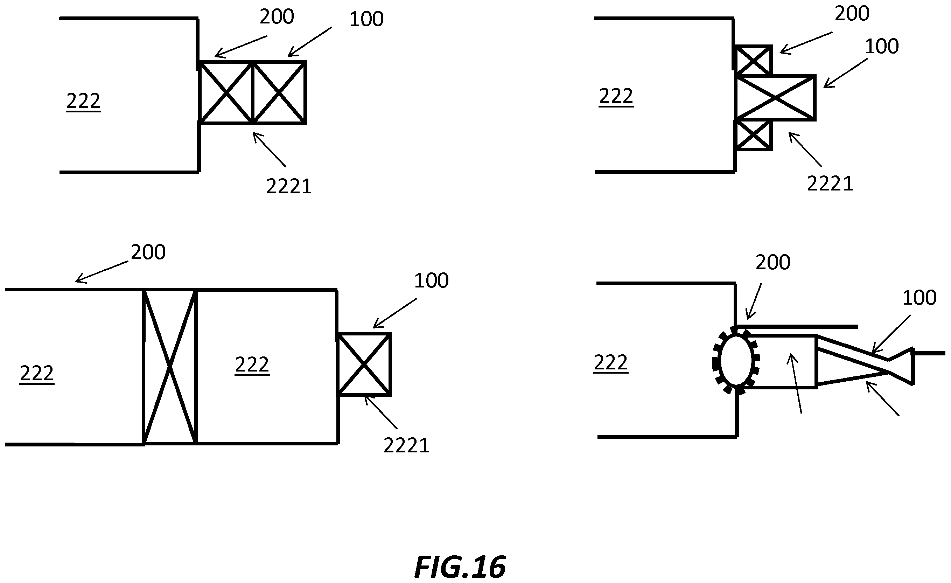

Lastly, figure 16 shows examples of staging options. In particular, fuel injection stages are referenced with numerals 100 and 200, associated to a burner 2221 and the combustion chamber 222 of the combustor 22.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1.  A system (1) for controlling a combustion process of a gas turbine (2), the gas turbine comprising a combustor (22) and a fuel feeding system (3) configured to control a first parameter $\omega$ defined as a ratio between NOx water and fuel oil mass flows, said system (1) comprising:

    - an apparatus (4) for measuring NOx emission levels in the exhaust of the combustor (22);
    - a measurement arrangement (51, 52) for measuring combustion process variables;
    - a controller (6) configured to receive input signals corresponding to measured NOx and process variables respectively from said apparatus (4) and from said measurement arrangement (51, 52) and to elaborate a value for the first parameter $\omega$ based on said input signals;

    the system (1) being *__characterised in that__* said controller is configured to generate and send a fuel oil mass flow command (81) and a NOx water mass flow command (82) to the fuel feeding system (3); the fuel oil mass flow command (81) and the NOx water mass flow command (82) being calculated on the basis of the elaborated value of the first parameter $\omega$.

2.  The system (1) according to the preceding claim, wherein said apparatus (4) is capable of measuring NOx emissions within a time frame shorter than 20 sec.

3.  The system (1) according to claims 1 or 2, wherein said measuring arrangement (51, 52) comprises a device (52) configured to measure pulsation levels within the combustor (22) .

4.  The system (1) according to any of claims 1-3, wherein said apparatus (4) for measuring NOx emission levels comprises an optical sensor device providing an array of nano and/or microcrystalline fibers.

5.  The system (1) according to any of the preceding claims, further comprising a fluid sample extraction assembly (13) located in a combustor plenum (225), wherein said apparatus (4) for measuring NOx emission levels is located at ambient conditions and is fluidically connected to said fluid sample extraction assembly (13).

6.  The system (1) according to any of claims 1 - 4, wherein said apparatus (4) for measuring NOx emission levels comprises a sensor (41) located inside a combustor plenum (225) and an evaluation unit (42) connected thereto in turn located at ambient conditions.

7.  The system (1) according to any of claims 3-6, wherein said controller (6) comprises first means (61) for calculating a second parameter $\Delta\omega$ based on measured levels of NOx (72) emissions and pulsations (71).

8.  The system (1) according to any of claims 3-7, wherein said controller (6) comprises second means (62) for calculating a third parameter $\omega'$ as a predefined function of measured process variables.

9.  The system (1) according to claims 7 and 8, wherein said controller comprises a subtracting device (63) configured to receive said third parameter $\omega'$ calculated by said second means (62) and said second parameter $\Delta\omega'$ calculated by said first means (61), and to generate and send to the fuel feeding system (3) an output signal corresponding to a value:

$$\omega \;=\; \omega' \;-\; \Delta\omega$$

10. A method for controlling a combustion process of a gas turbine (2), the gas turbine comprising at least a combustor (22) and a fuel feeding system (3) configured to control a first parameter $\omega$ defined as a ratio between NOx water mass and fuel oil flows, said method including the steps of:

    - measuring NOx emission levels in the exhaust of the combustor (22);
    - measuring combustion process variables;
    - elaborating a value for said first parameter $\omega$ based on said NOx emissions and measured process variables;

    the method being **characterised in that** it comprises a step of generating a fuel oil mass flow command (81) and a NOx water mass flow command (82) correspondent to said value of the first parameter $\omega$ and sending said fuel oil mass flow command (81) and said NOx water mass flow command (82)to the fuel feeding system (3).

11. The method according to the preceding claim, wherein each NOx emission measurement is accomplished within a time frame shorter than 20 sec.

12. The method according to claims 10 or 11, wherein said measuring combustion process variables includes measuring pulsation levels within the combustor.

13. The method according to any of claims 10-12, wherein said step of elaborating a value for said first parameter $\omega$ comprises calculating a second parameter $\omega'$ as a predefined function of measured process variables.

14. The method according to claims 12 or 13, wherein said step of elaborating a value for said first parameter $\omega$ comprises a step of calculating a third parameter $\Delta\omega$ based on measured NOx emissions levels and pulsation levels.

15. The method according to claims 13 and 14, wherein said step of elaborating a value for said first parameter $\omega$ comprises a step of subtracting said third parameter $\Delta\omega$ from said second parameter $\omega'$ and generating and sending to the fuel feeding system (3) an output signal corresponding to a value: $\omega = \omega' - \Delta\omega$.

**Patentansprüche**

1. System (1) zur Steuerung eines Verbrennungsprozesses einer Gasturbine (2), wobei die Gasturbine eine Brennkammer (22) und ein Brennstoffzuführsystem (3) umfasst, das dazu dient, einen ersten Parameter $\omega$ zu steuern, der definiert ist als ein Verhältnis zwischen NOx-Wasser- und Brennölmassenflüssen, wobei das System (1) Folgendes umfasst:

   - eine Vorrichtung (4) zur Messung von NOx-Emissionsniveaus im Abgas der Brennkammer (22);
   - eine Messvorrichtung (51, 52) zur Messung von Variablen des Verbrennungsprozesses;
   - eine Steuereinheit (6), die dazu dient, Eingangssignale zu empfangen, welche den von der Vorrichtung (4) und der Messvorrichtung (51, 52) gemessenen NOx-Werten bzw. Prozessvariablen entsprechen, und auf der Basis der Eingangssignale einen Wert für den ersten Parameter $\omega$ zu bestimmen;

   wobei das System (1) **dadurch gekennzeichnet ist, dass** die Steuereinheit dazu dient, einen Brennölmassenflussbefehl (81) und einen NOx-Wassermassenflussbefehl (82) zu erzeugen und an das Brennstoffzuführsystem (3) zu senden; wobei der Brennölmassenflussbefehl (81) und der NOx-Wassermassenflussbefehl (82) auf der Basis des ermittelten Wertes des ersten Parameters $\omega$ berechnet werden.

2. System (1) nach dem vorstehenden Anspruch, wobei die Vorrichtung (4) in der Lage ist, NOx-Emissionen innerhalb eines Zeitraums von weniger als 20 Sekunden zu messen.

3. System (1) nach Anspruch 1 oder 2, wobei die Messvorrichtung (51, 52) eine Vorrichtung (52) umfasst, welche dazu dient, Pulsationsniveaus in der Brennkammer (22) zu messen.

4. System (1) nach einem der Ansprüche 1 - 3, wobei die Vorrichtung (4) zur Messung der NOx-Emissionsniveaus eine optische Sensorvorrichtung umfasst, die eine Anordnung von Nanofasern und/oder mikrokristallinen Fasern bereitstellt.

5. System (1) nach einem der vorstehenden Ansprüche, zudem umfassend eine in einem Brennkammerplenum (225) angeordnete Flüssigkeits-Probenahmevorrichtung (13), wobei die Vorrichtung (4) zur Messung der NOx-Emissionsniveaus unter Umgebungsbedingungen angeordnet ist und mit der Flüssigkeits-Probenahmevorrichtung (13) in Fluidverbindung steht.

6. System (1) nach einem der Ansprüche 1 - 4, wobei die Vorrichtung (4) zur Messung der NOx-Emissionsniveaus einen in einem Brennkammerplenum (225) angeordneten Sensor (41) und eine damit verbundene Auswertungseinheit (42) umfasst, die wiederum unter Umgebungsbedingungen angeordnet ist.

7. System (1) nach einem der Ansprüche 3 - 6, wobei die Steuereinheit (6) eine erste Vorrichtung (61) zur Berechnung eines zweiten Parameters $\Delta\omega$ auf der Basis der gemessenen Emissionswerte von NOx (72) und der Pulsationen (71) umfasst.

8. System (1) nach einem der Ansprüche 3 - 7, wobei die Steuereinheit (6) eine zweite Vorrichtung (62) zur Berechnung eines dritten Parameters ω' als eine vordefinierte Funktion der gemessenen Prozessvariablen umfasst.

9. System (1) nach Anspruch 7 und 8, wobei die Steuereinheit eine Subtraktionseinheit (63) umfasst, die dazu dient, den von der zweiten Vorrichtung (62) berechneten dritten Parameter ω' und den von der ersten Vorrichtung (61) berechneten zweiten Parameter Δω zu empfangen und ein Ausgangssignal zu erzeugen und an das Brennstoffzuführsystem (3) zu senden, wobei das Ausgangssignal folgendem Wert entspricht:

$$\omega = \omega' - \Delta\omega$$

10. Verfahren zur Steuerung eines Verbrennungsprozesses einer Gasturbine (2), wobei die Gasturbine mindestens eine Brennkammer (22) und ein Brennstoffzuführsystem (3) umfasst, das dazu dient, einen ersten Parameter ω zu steuern, der definiert ist als ein Verhältnis zwischen NOx-Wasser- und Brennölmassenflüssen, wobei das Verfahren folgende Schritte umfasst:

   - Messen der NOx-Emissionsniveaus im Abgas der Brennkammer (22);
   - Messen der Variablen des Verbrennungsprozesses;
   - Bestimmen eines Wertes für den ersten Parameter ω auf der Basis der NOx-Emissionsniveaus und der gemessenen Prozessvariablen;

   wobei das Verfahren **dadurch gekennzeichnet ist, dass** es einen Schritt umfasst, in dem ein Brennölmassenflussbefehl (81) und ein NOx-Wassermassenflussbefehl (82) erzeugt wird, die dem Wert des ersten Parameters ω entsprechen, wobei der Brennölmassenflussbefehl (81) und der NOx-Wassermassenflussbefehl (82) an das Brennstoffzuführsystem (3) gesendet werden.

11. Verfahren nach dem vorstehenden Anspruch, wobei jede NOx-Emissionsmessung innerhalb eines Zeitraums von weniger als 20 Sekunden erfolgt.

12. Verfahren nach Anspruch 10 oder 11, wobei das Messen der Prozessvariablen der Verbrennung das Messen der Pulsationsniveaus in der Brennkammer umfasst.

13. Verfahren nach einem der Ansprüche 10 - 12, wobei der Schritt des Bestimmens eines Wertes für den ersten Parameter ω das Berechnen eines zweiten Parameters ω' als eine vordefinierte Funktion der gemessenen Prozessvariablen umfasst.

14. Verfahren nach Anspruch 12 oder 13, wobei der Schritt des Bestimmens eines Wertes für den ersten Parameter ω einen Schritt umfasst, in dem auf der Basis der gemessenen NOx-Emissionsniveaus und der Pulsationsniveaus ein dritter Parameter Δω berechnet wird.

15. Verfahren nach Anspruch 13 und 14, wobei der Schritt des Bestimmens eines Wertes für den ersten Parameter ω einen Schritt umfasst, in dem der dritte Parameter Δω von dem zweiten Parameter ω' subtrahiert wird und ein Ausgangssignal, das einem Wert ω = ω' - Δω entspricht, erzeugt und an das Brennstoffzuführsystem (3) gesendet wird.

**Revendications**

1. Système (1) destiné à commander un processus de combustion d'une turbine à gaz (2), la turbine à gaz comprenant une chambre de combustion (22) et un système d'approvisionnement en combustible (3), configuré pour commander un premier paramètre ω défini comme étant le rapport entre les débits massiques d'eau NOx et de mazout, ledit système (1) comprenant :

   - un appareil (4) destiné à mesurer les niveaux d'émissions de NOx dans les gaz d'échappement de la chambre de combustion (22) ;
   - un agencement de mesure (51, 52) destiné à mesurer des variables du processus de combustion ;

- un contrôleur (6) configuré pour recevoir des signaux d'entrée correspondant au NOx mesuré et des variables du processus, respectivement, en provenance dudit appareil (4) et dudit agencement de mesure (51, 52), et pour élaborer une valeur du premier paramètre ω sur la base desdits signaux d'entrée ;

le système (1) étant **caractérisé en ce que** ledit contrôleur est configuré pour générer et envoyer au système d'approvisionnement en combustible (3) une commande de débit massique de mazout (81) et une commande de débit massique d'eau NOx (82) ;
la commande de débit massique de mazout (81) et la commande de débit massique d'eau NOx (82), étant calculées sur la base de la valeur élaborée du premier paramètre ω.

2. Système (1) selon la revendication 1, où ledit appareil (4) peut mesurer des émissions de NOx dans une plage de temps inférieure à 20 s.

3. Système (1) selon la revendication 1 ou 2, où ledit agencement de mesure (51, 52) comprend un dispositif (52) configuré pour mesurer des niveaux de pulsations dans la chambre de combustion (22).

4. Système (1) selon l'une quelconque des revendications 1 à 3, où ledit appareil (4) destiné à mesurer les niveaux d'émissions de NOx, comprend un dispositif de capteur optique doté d'un réseau de nanofibres et / ou de fibres microcristallines.

5. Système (1) selon l'une quelconque des revendications précédentes, comprenant en outre un ensemble d'extraction d'échantillon de fluide (13) situé dans un plénum de chambre de combustion (225), où ledit appareil (4) destiné à mesurer les niveaux d'émissions de NOx, se situe dans des conditions ambiantes et est connecté de manière fluidique audit ensemble d'extraction d'échantillon de fluide (13).

6. Système (1) selon l'une quelconque des revendications 1 à 4, où ledit appareil (4) destiné à mesurer les niveaux d'émissions de NOx, comprend un capteur (41) situé à l'intérieur d'un plénum de la chambre de combustion (225), et une unité d'évaluation (42) connectée à celui-ci, qui se situe également dans des conditions ambiantes.

7. Système (1) selon l'une quelconque des revendications 3 à 6, où ledit contrôleur (6) comprend des premiers moyens (61) destinés à calculer un deuxième paramètre Δω sur la base des niveaux mesurés d'émissions de NOx (72) et des pulsations (71).

8. Système (1) selon l'une quelconque des revendications 3 à 7, où ledit contrôleur (6) comprend des seconds moyens (62) destinés à calculer un troisième paramètre ω' comme une fonction prédéfinie de variables de processus mesurées.

9. Système (1) selon les revendications 7 et 8, où ledit contrôleur comprend un dispositif de soustraction (63) configuré pour recevoir ledit troisième paramètre ω' calculé par lesdits seconds moyens (62), et ledit deuxième paramètre Δω calculé par lesdits premiers moyens (61), et pour générer et envoyer au système d'approvisionnement en combustible (3), un signal de sortie correspondant à une valeur :

$$\omega = \omega' - \Delta\omega$$

10. Procédé destiné à commander un processus de combustion d'une turbine à gaz (2), la turbine à gaz comprenant au moins une chambre de combustion (22) et un système d'approvisionnement en combustible (3), configuré pour commander un premier paramètre ω défini comme étant un rapport entre les débits massiques d'eau NOx et de mazout, ledit procédé comprenant les étapes suivantes :

- mesurer les niveaux d'émissions de NOx dans les gaz d'échappement de la chambre de combustion (22) ;
- mesurer des variables du processus de combustion ;
- élaborer une valeur dudit premier paramètre ω sur la base desdites émissions de NOx et desdites variables du processus mesurées ;

le procédé étant **caractérisée en ce qu'**il comprend les étapes consistant à générer une commande de débit massique de mazout (81), et une de commande de débit massique d'eau NOx (82), correspondant à ladite valeur du premier paramètre ω, et à envoyer au système d'approvisionnement en combustible (3) ladite commande de débit massique de mazout (81), et ladite commande de débit massique d'eau NOx (82).

11. Procédé selon l'une quelconque des revendications précédentes, où chaque mesure d'émissions de NOx se fait dans une plage de temps inférieurs à 20 s.

12. Procédé selon la revendication 10 ou 11, où ladite étape consistant à mesurer les variables du processus de combustion, comprend une étape consistant à mesurer les niveaux de pulsations dans la chambre de combustion.

13. Procédé selon l'une quelconque des revendications 10 à 12, où ladite étape consistant à élaborer une valeur dudit premier paramètre $\omega$, comprend une étape consistant à calculer un deuxième paramètre $\omega'$ comme une fonction prédéfinie des variables du processus mesurées.

14. Procédé selon la revendication 12 ou 13, où ladite étape consistant à élaborer une valeur dudit premier paramètre $\omega$, comprend une étape consistant à calculer un troisième paramètre $\Delta\omega$ sur la base des niveaux d'émissions de NOx et des niveaux de pulsations mesurés.

15. Procédé selon les revendications 13 et 14, où ladite étape consistant à élaborer une valeur une valeur dudit premier paramètre $\omega$, comprend les étapes consistant à soustraire ledit troisième paramètre $\Delta\omega$ dudit deuxième paramètre $\omega'$, et à générer et à envoyer au système d'approvisionnement en combustible (3), un signal de sortie correspondant à la valeur : $\omega = \omega' - \Delta\omega$.

**FIG.1**

EP 3 101 342 B1

*FIG.2*

EP 3 101 342 B1

FIG.3

**FIG.4**

EP 3 101 342 B1

23

18

222

226

224

19

41

225

42

7

6

**FIG.5**

FIG.6

EP 3 101 342 B1

**FIG.7**

EP 3 101 342 B1

FIG.8

EP 3 101 342 B1

**FIG.9**

**FIG.10**

**FIG.11**

FIG.12

FIG.13

**FIG.14**

EP 3 101 342 B1

**FIG.15**

EP 3 101 342 B1

**FIG.16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6679060 B2
- EP 1215382 B1
- WO 2004010052 A
- US 20070133921 A